# EUROPEAN PATENT APPLICATION

(11) **EP 1 146 435 A2**
(43) Date of publication of application: **17.10.2001**
(21) Application number: 01301704.1
(22) Date of filing: 26.02.2001
(51) Int. Cl.: G06F 17/21, G06F 17/30

(54) **Content store management**

(30) Priority: 13.04.2000 GB 0009014
(71) Applicant: International Computers Ltd., London, EC2A 1SL (GB)
(72) Inventor: Duxbury, Paul, Sandbach, Cheshire CW11 1RN (GB)
(74) Representative: Guyatt, Derek Charles

(57) **Abstract**

In an electronic content store (e.g. for a Web site), objects are organised in a tree structure. Some of the objects are class objects, which define a set of classes for other objects in the store, and at least some of the class objects contain information specifying what classes of child object are permitted for objects of the class defined by this class object. At least some of the class objects own other objects, which describe properties of objects of the class defined by this class object by virtue of their own properties.

## Description

### Background to the Invention

This invention relates to a method and apparatus for managing objects in an electronic content store. The invention is particularly although not exclusively concerned with storing content for web sites.

By content is meant any information or goods that are delivered electronically to a consumer, either directly or indirectly.
For example, content may be embodied in HTML pages and their associated images, and delivered directly to users through the World Wide Web. However, the advent of more general eBusiness (electronic business) applications has led to a corresponding generalisation in the definition of content to include, for example:
- Web pages and images.
- Multimedia files (e.g. audio & video clips).
- Streaming media.
- Shopping catalogues.
- "Soft" or "digital" goods for sale (e.g. downloadable music and software).
- Functionality, as embodied in CGI scripts and their modern equivalents.

Such content is generally held in some form of content store. For example, in a conventional website, the content store may be an ordinary filestore containing prepared HTML pages. Alternatively, in a dynamic website, the content store may be a relational database holding raw data, and publishing may use some dynamic page construction mechanism such as CGI or ASP, or a template rendering mechanism, to construct web pages when required.

The object of the present invention is to provide a novel technique for managing objects in such a content store.

### Summary of the Invention

According to the invention, a method for managing objects in an electronic content store comprises:
(a) organising the objects in a tree structure,
(b) specifying some of the objects as class objects, which define a set of classes for other objects in the store; and
(c) including information in at least some of the class objects, specifying what classes of child object are permitted for objects of the class defined by this class object.

### Brief Description of the Drawings

Figure 1 shows a computer system embodying the invention.
Figure 2 shows the logical organisation of a content store.
Figure 3 shows an example of a resource schema.

### Description of an Embodiment of the Invention

One embodiment of the invention will now be described by way of example with reference to the accompanying drawings.

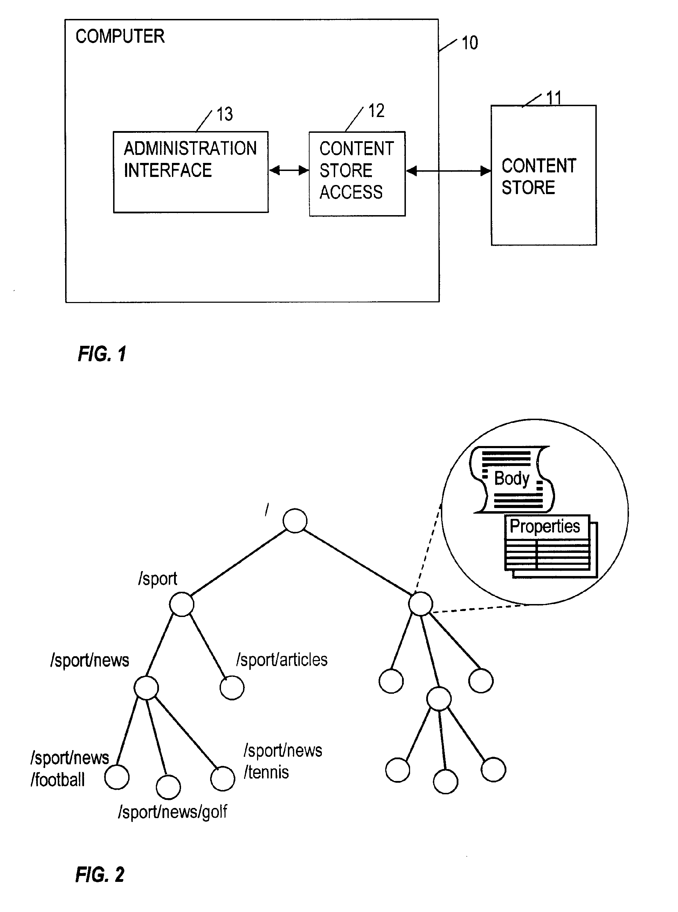

Figure 1 shows a computer 10, which in this example is assumed to be used for developing new websites or updating existing web pages. A content store 11 holds the content for the websites. The computer accesses the content store by way of a content store access service 12. The computer also incudes an administration interface 13.

### Content store

The content store 11 holds all the content for the website. It contains a set of objects, logically organised in a tree structure. Each object represents either an actual item of content (such as a template, dynamic information to be inserted into a template, or a rendered document), or a folder which may contain other objects. As will be described, objects are also used to represent classes defining a resource schema.

The content store may be distributed, and accessed over a network using the standard WebDAV (Web-based Distributed Authoring and Versioning) protocol, or alternatively may be local. The content store may simultaneously include many distinct implementations of the logical model on different media, such as relational database management systems, filesystems, memory, XML documents, and so on.

Each object in the content store has a hierarchic address, which identifies its position in the tree structure. For example, Figure 2 shows a portion of the content store, with objects identified by addresses such as "/sport/news/football". The root of the tree is indicated by "/". The objects directly below an object in the tree structure are referred to as its children; for example "/sport" has two children, "/sport/news" and "/sport/articles". Conversely, the object directly above an object in the tree is referred to as its parent; for example, "/sport" is the parent of "/sport/news" and "/sport/articles".

Each object in the content store has an internal structure, comprising a content body, and a number of properties. The properties may be further organised into one or more property sheets, so that name clashes between standard properties and those assigned by different groups of individuals are avoided.

Property sheets provide a convenient visualisation of the concept of XML namespaces as used in WebDAV.

The properties of an object can be addressed by appending a suffix of the form :*propertysheet*:*property* to the object address. For example,
/news/speeches/s1234:PUBLIC:speaker addresses the *speaker* property on the PUBLIC property sheet of the object at /news/speeches/s1234. If the property sheet is not specified, the PUBLIC property sheet is assumed by default.

An object can model any of the following items:
- A simple file, where all the content is in the body, and is treated as just an unstructured row of bytes or text characters. There may be some fixed properties, such as content length and modification date, corresponding to those of an ordinary file.
- A document together with its metadata, i.e. information about the document such as its author, approval status, subject matter, default publishing template and so on.
- A fielded database record, where all the data is held in the properties, here having the role of database fields.
- Combinations of the above, e.g. a fielded database record with associated metadata.

### Templates

The system includes a template-based rendering system for generating web pages. In such a system, a graphic designer generates HTML for the look and feel of a site, but leaves "holes" into which dynamic information can be placed. This is known as a *template.* When required, the template is rendered, by inserting the dynamic information into the holes, to generate pure HTML.

In this embodiment, a template consists of a document (typically HTML) containing embedded commands that identify what information is to be inserted into the template when it is rendered. These commands include WebDAV and other commands, embedded in the document using XML syntax.

Templates may reside in file store, or may be held in the content store itself.

### Administration interface

The administration interface 13 allows content to be browsed, copied, moved, tagged and similarly managed. It also provides a launchpad for other management functions, such as import/export and publishing.

The interface displays a screen containing two panels. The left panel is a conventional folding-tree view of the content store. It shows content down to the folder level. Folders may be expanded by clicking on a "+" icon, or selected by clicking on their icons.

The right panel shows details of the folder currently selected in the tree view. Resources (objects) within the selected folder may be selected by clicking on their icons. Tabs are provided to allow viewing of one or more properties sheets and a content sheet for the selected object.

The interface also provides a toolbar, which allows miscellaneous operations to be performed on the selected object. Standard operations include "cut", "copy", "paste", "preview", "select all", "import/export" etc.

### Resource Schema

Some of the objects held in the content store are class objects, which define a set of classes for other objects in the store. The set of available classes is collectively referred to herein as a resource schema. As will be described, when creating a new object, a user can specify a class for that object, and the new object will then automatically take on the properties of that class.

An important feature of the schema is that it is represented as ordinary objects, and so all the ordinary content operations can apply to it. In particular, it can be accessed and modified by any of the normal methods (WebDAV, the User Interface, templates etc.), can be imported/exported as XML, can have versioning and access control applied, and so on. Furthermore, if an administrator does not have access permission to an object that happens to be part of a schema and describes some property in an object instance, then the administrator will not be able to see the property in HTML forms when he or she updates object instances.

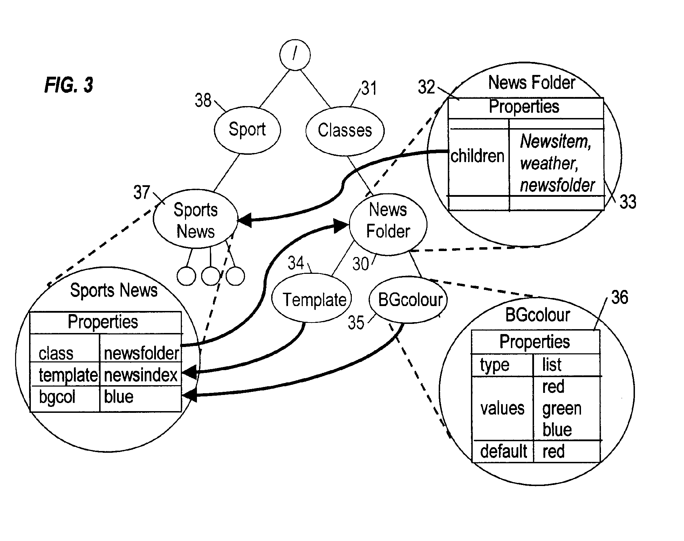

Figure 3 shows an example of a resource schema. In this example, the schema includes a "News Folder" class object 30, which describes the attributes of News Folder objects. As shown, the News Folder class object resides in a special "Classes" directory 31 in the tree structure. This directory may also contain other class objects (not shown).

The News Folder class object 30 has a set of properties 32, which define attribute values shared by all members of this class. In particular, one property 33 defines what types of child object a News Folder object may have. In this example, a News Folder object may have children of the following three classes:
- news items,
- weather reports, and
- other news folders for substructuring.

A class object may itself have a number of child objects, which represent resources owned by the class. In this example, the News Folder class object 30 has two child objects: a template object 34, used to display the list of news items, and a BGcolour (background colour) object 35, for use in the template. The BGcolour object has a set of properties, including a set of permitted background colours that can be used in the template: in this case red, blue or green. Another property of the BGcolour object specifies the default colour: in this case, red.

Figure 3 also shows a "Sports News" directory object 37, which resides in a "Sports" directory 38. The Sports News directory is assumed to be a member of the News Folder class, as defined by the News Folder class object 30, and so inherits the properties of that class. In particular, it uses the template object 34 as its default template for generating web pages, and uses the BGcolour object 35 to specify its background colours.

### Creating a new object

When a user desires to create a new object in the content store, the user first uses the administration interface 13 to select an existing object that is to be the parent of the new object. The administration interface toolbar includes a "Create new object" option. If this option is selected, the administration interface automatically accesses the class object corresponding to the selected object, to find the permitted classes of child object for the selected object. A drop-down menu is displayed, listing these permitted classes.

If the user selects one of these permitted classes, the administration interface then automatically creates a new object of the selected class, giving it the properties of that class as specified by the class object for that class. The user can then edit the new object, if desired, for example by inserting text or other content into it.

For example, referring to Figure 3, if the user wishes to create a new object in the Sports News directory, the user first selects this directory and then clicks on the "Create new object" option. The administration interface will then access the News Folder class object 30, and display a drop-down menu containing a list of the permitted child objects for this class: namely News Item, Weather Report and News Folder. The user can then select one of these (say News Item), and the administration interface will then automatically create a new object of this class.

### Some possible modifications

It will be appreciated that many modifications may be made to the system described above without departing from the scope of the present invention.

For example, while the example described above is concerned with generating web pages, it will be appreciated that it could also be used in for generating other types of document, for example in non-web applications such as paper publishing and "digital dashboards".

## Claims

1. A method for managing objects in an electronic content store, the method comprising:
(a) organising the objects in a tree structure,
(b) specifying some of the objects as class objects, which define a set of classes for other objects in the store; and
(c) including information in at least some of the class objects, specifying what classes of child object are permitted for objects of the class defined by this class object.

2. A method according to Claim 1 wherein the objects in the electronic content store comprise content for a website.

3. A method according to Claim 1 or 2 wherein at least some of the class objects own other objects, which describe properties of objects of the class defined by this class object by virtue of their own properties.

4. A method according to any preceding claim wherein the class of an object is indicated by a property of that object.

5. A method according to any preceding claim, further comprising creating a new object by the steps:
(a) selecting an existing object, which is to own the new object;
(b) accessing a class object corresponding to the class of the existing object;
(c) determining from that class object what classes of child object are permitted for the existing object;
(d) displaying a menu of the permitted child object classes, allowing a user to select one of these classes; and
(e) creating a new object with the selected class, as a child of the existing object.

6. A method according to Claim 5 including creating and initialising properties for the new object based on property description objects owned by the new object's class object.

7. A method according to any preceding claim wherein at least some of the class objects have child objects, which represent resources owned by that class.

8. A method according to Claim 7 wherein at least some of the child objects include information specifying properties and possible values of those properties for objects of that class.

9. A method according to Claim 8 wherein the information describing the properties may be used for automatic generation of (HTML) forms for updating the described properties.

10. A method according to any one of Claims 7 to 9 wherein at least some of the child objects include information specifying default values of properties for objects of that class.

11. A method according to any one of Claims 7 to 10 wherein at least some of the child objects include information specifying access controls on properties for objects of that class, dictating who can read and/or modify and/or determine the existence of the property.

12. A method according to any preceding claim wherein all aspects of object classes can be accessed and modified in precisely the same way as aspects of objects described by those classes.

13. A web server including:
(a) an electronic content store holding a plurality of objects;
(b) the objects in the content store being organised in a tree structure;
(c) some of the objects being class objects, which define a set of classes for other objects in the store; and
(d) at least some of the class objects, containing information specifying what classes of child object are permitted for objects of the class defined by this class object.

14. A computer program product comprising a data carrier including a computer program for performing a method for managing objects in an electronic content store, the method comprising:
(a) organising the objects in a tree structure,
(b) specifying some of the objects as class objects, which define a set of classes for other objects in the store; and
(c) including information in at least some of the class objects, specifying what classes of child object are permitted for objects of the class defined by this class object.
